# EUROPEAN PATENT APPLICATION

(11) **EP 0 788 213 A1**
(43) Date of publication of application: **06.08.1997**
(21) Application number: 97300364.3
(22) Date of filing: 21.01.1997
(51) Int. Cl.: H02K 5/124, H02K 5/136, H02K 9/24

(54) **Double insulated seal casing for electrical generator**

(30) Priority: 02.02.1996 US 594678
(71) Applicant: GENERAL ELECTRIC COMPANY, Schenectady, NY 12345 (US)
(72) Inventor: Steinbach, Albert Eugene, Schenectady, New York 12306 (US)
(74) Representative: Goode, Ian Roy

(57) **Abstract**

A doubly-insulated hydrogen seal casing (60) is provided about a generator shaft (16) and coupled to an end shield (14) by a single bolt circle (74) with bolts extending through an annular conductive ring (62) and two layers (64,66) of electrical insulating material. The first layer (64) is interposed between the annular conductive ring (62) and the seal casing (60) and the second layer (66) is interposed between the conductive ring (62) and the end shield (14). By this construction, the insulation resistance of the insulating layers can be measured with the seal casing installed and by using only a single bolt circle, the space occupied by the seal casing is substantially reduced.

## Description

The present invention relates to a seal casing for an electrical generator and particularly relates to a double-insulated casing, particularly useful for hydrogen-cooled generators, for electrically isolating the generator housing and stator from the shaft and preventing a closed electrical loop from forming between the housing and stator and end portions of the housing about the shaft.

Large-scale turbine generators are typically designed and utilized to provide electrical power for utility and industrial applications. In such large turbine-driven generators, for example, hydrogen-cooled generators, electrically insulating hydrogen-seal casings have previously been employed to prevent a closed electrical loop from forming between the shaft, stator and two ends of the generator. If such loop is formed, current could then pass through the seal rings and bearings, causing arcing and pitting of their surfaces and the shaft surfaces.

Two types of insulated hydrogen seal casings have previously been employed to electrically isolate the generator housing and the shaft. One such typical hydrogen seal casing comprises an annular casing having seals about its radial inner end for sealing about the shaft and a bolt circle adjacent a radial outer portion of the casing for securing the casing to the end shield of the generator housing. Interposed between the casing and the end shield is a single layer of electrical insulation for electrically isolating the generator housing and the shaft and other components thereof. While this has been effective to afford such isolation, resistance measurements across the insulation do not give the insulation value of the insulator itself but measure only the electrical resistance through the housing and other component parts from opposite sides of the single insulating layer.

In a second typical hydrogen seal casing, there is provided annular inner and outer casings. The inner annular casing has seals about the shaft. The radial outer portion of the inner casing is secured by a bolt circle to an inner radial portion of the outer casing with a single layer of insulation interposed between the inner and outer casings. A second radially outer bolt circle secures the outer casing to the end shield, another layer of electrical insulating material being disposed between the outer casing and the end shield. While this second layer of insulation makes it possible to measure the insulation resistance, even with the seal casings installed in the generator, the materials and construction of the inner and outer casings and the insulating layers and two bolt circles require substantial space at the collector end of the generator and especially at the splitlines of the casings. In new generator designs, insufficient space is provided between the collector-end end shield and the shaft to provide the double casing and dual insulating layer arrangement Additionally, because the casings are constructed in 180° segments or casing halves, the reduced space required for new generators also affords insufficient access to bolt the segment halves to one another at the casing splitlines. Consequently, the two aforedescribed traditional approaches to provide hydrogen seal casings in generators have not proved feasible for new generators where double insulation is desired and only a finite reduced radial and axial space is provided between the end shield and shaft to provide the insulated casing.

According to the present invention, there is provided a double-insulated hydrogen seal casing for a generator in a radially smaller space than previously allotted to hydrogen seal casings and in a manner which eliminates one of the bolt circles previously used in a double-insulated hydrogen seal casing arrangement. To accomplish this, the present invention provides a generally annular hydrogen seal casing formed of arcuate segments, i.e., a pair of casing halves, with flanges for joining the halves one to the other at diametrically opposite locations. The annular casing houses the necessary seals adjacent its radially inner portion for sealing about the shaft of the generator. A radially outer portion of the annular casing mounts an annular ring which has dual annular layers of electrical insulation. A first annular layer of electrical insulation is interposed between the annular ring and the radial outer portion of the casing, while a second layer of electrically insulating material is disposed between the ring and an annular end wall forming part of the end shield of the generator. A single bolt circle, together with insulated bolts, is provided to secure the annular casing to the end shield with the insulating layers and ring interposed therebetween. By providing a single ring with electrical insulating layers on opposite sides, only a single bolt circle is required to secure the hydrogen seal casing to the generator housing, while at the same time the desirable double insulation effects are obtained. For example, it is possible with this invention to measure the insulation resistance directly across each of the insulating layers to ensure appropriate electrical isolation. Thus, the advantageous double-insulating effects, together with the single bolt layer, enable the hydrogen seal casing for disposition in a reduced volume or space between the end shield and shaft required for new generators.

In a preferred embodiment according to the present invention, there is provided an electrical generator comprising a generator housing having an annular end wall, a rotor shaft in the generator housing, a generally annular seal carried by the generator housing and wall for sealing about the shaft, the seal including an annular casing, an annular seal ring, a first annular electrically insulating layer between the casing and one side of the ring and a second annular electrically insulating layer between an opposite side of the ring and the end wall and means for securing the seal to the end wall of the housing.

Accordingly, the present invention provides a novel and double insulated seal casing for an electrical generator featuring only a single bolt circle, a reduced number of parts, and the capability of installation in a reduced volume.

Embodiments of the invention will now be described, by way of example, with reference to the accompanying drawings, in which:-
FIGURE 1 is a schematic illustration with portions broken out of a prior art generator,
FIGURES 2 and 3 are enlarged fragmentary cross-sectional views illustrating two seal casings of the prior art;
FIGURE 4 is a fragmentary cross-sectional view illustrating the doubly-insulated seal casing with single bolt circle according to the present invention; and
FIGURE 5 is a reduced end view illustrating the seal casing.

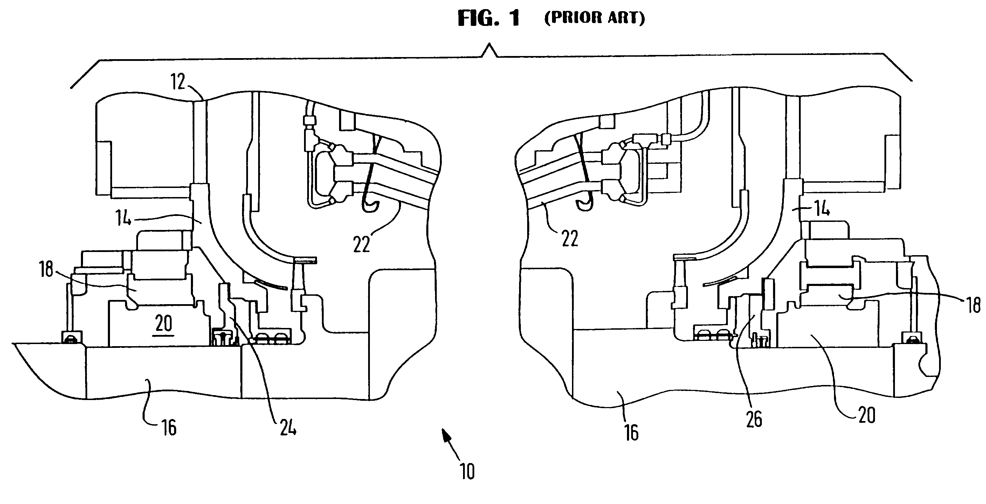

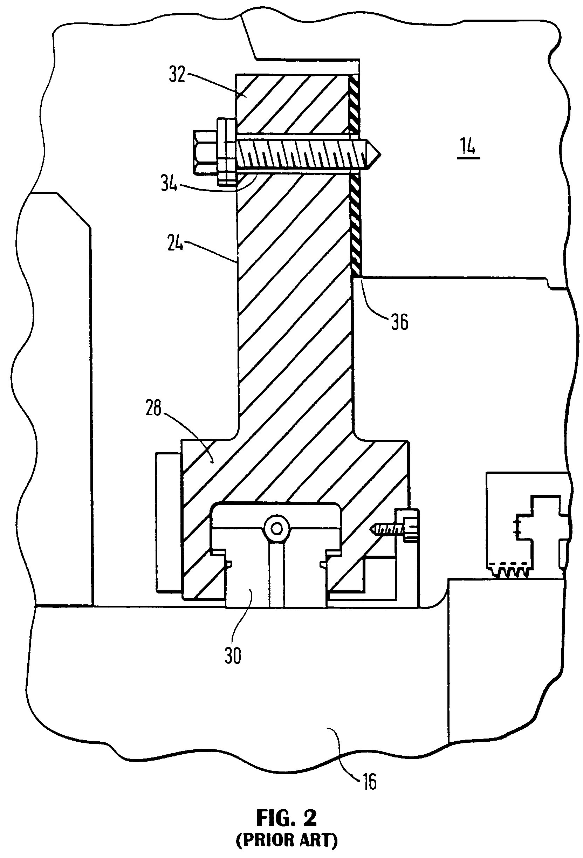

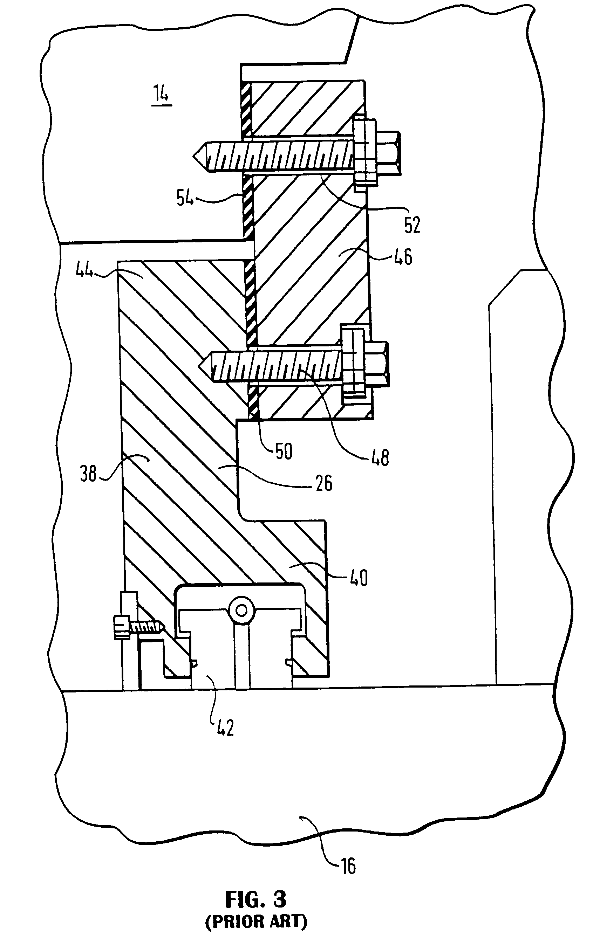

Referring now to the drawings, particularly to Figure 1, there is illustrated a generator, generally designated 10, including a housing 12 having end shields 14 at opposite ends of the generator and a generator shaft 16. The housing mounts a bearing ring 18 and a bearing 20 at the opposite ends. Only partially illustrated are the stator windings 22. In this prior art generator, there is provided an uninsulated annular seal casing 24 at the turbine end of the generator and an insulated annular seal casing 26 at the collector end of the generator. For illustrative purposes, these seals are shown in Figures 2 and 3, respectively, it being recognized that typically both embodiments can be employed at the collector end if and when insulation is present.

Referring to Figure 2, one type of prior art collector end annular seal casing 24 has a radially inner portion 28 mounting seals 30 about the shaft 16. A radial outer portion 32 of the casing 24 is secured to the end shield 14 by a bolt circle including insulated bolts 34. Between the casing 24 and the end shield 14 is a single layer 36 of electrically insulating material. Thus, the electrically insulating layer 36 prevents a closed electrical loop from forming by interrupting the loop between the casing 24 and the end shield 14.

In Figure 3, another type of collector-end seal casing 26 is illustrated and includes an inner annular casing 38 having a radially inner portion 40 mounting seals 42 engaging the shaft 16. The radial outer portion 44 of the inner casing 38 is secured to an outer annular casing 46 by an inner bolt circle comprised of insulated bolts 48. The insulated bolts extend through the outer casing 46 for threaded engagement in the inner casing 38 and also pass through an inner layer 50 of electrically insulating material between the inner and outer casings 38 and 46, respectively. The outer casing 46 is secured to the end shield 14 at an outer bolt circle including insulated bolts 52 in threaded engagement with the end shield 14. Interposed between the outer casing 46 and the end shield is a second layer 54 of electrically insulating material. It will be appreciated that the prior art seal casing of Figure 3 affords a double insulating effect at the expense of two bolt circles. It will be appreciated that in both Figures 2 and 3, the seal casings are formed in arcuate segments, e.g., preferably segment halves, and are secured to one another at diametrically opposed flanges. This requires substantial space or volume about the shaft to secure the inner and outer casings, as well as to secure the segments of those inner and outer casings to one another.

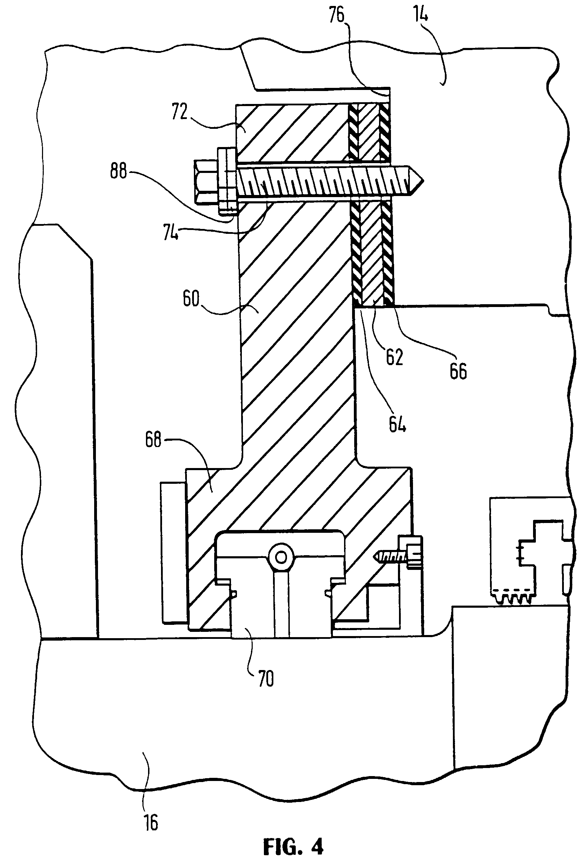

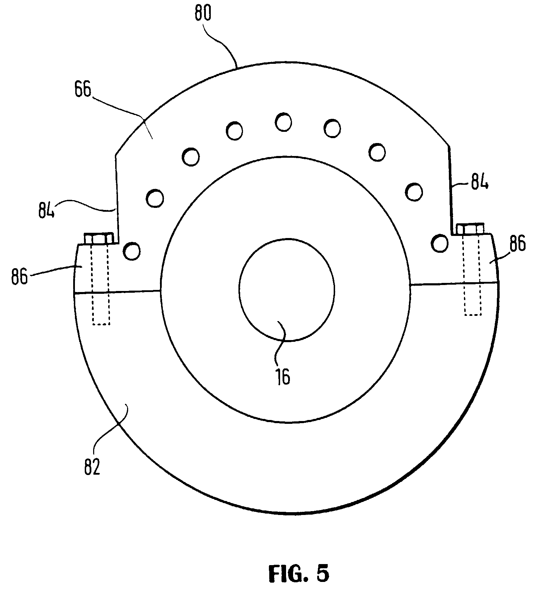

Referring to the present invention as illustrated in Figures 4 and 5, there is provided a seal assembly between the end shield 14 and the shaft 16 which includes an annular seal casing 60, an annular conductive ring 62 and first and second layers 64 and 66 of electrically insulating material. Though the invention is depicted as installed at the turbine end, it is recognized that its primary application is at the collector end. The annular seal casing 60 has adjacent its radial inner portion 68 seals 70 for engaging the generator shaft 16. A radial outer portion 72 of the seal casing 60 is secured at a single bolt circle including insulated bolts 74 to the annular end face 76 of the end shield 14. Interposed between the seal casing 60 and end face 76 of end shield 14 is the conductive ring 62 and insulating layers 64 and 66. The first insulating layer 64 is interposed between the conductive ring 62 and seal casing 60, while the second layer 66 is interposed between the annular conductive ring 62 and end face 76. In this manner, the advantageous double-insulating effects of the insulating layers are achieved. It will also be appreciated that only a single bolt circle is used to secure the seal casing 60 to the end shield while maintaining the double-insulating effect.

As illustrated in Figure 5, the seal casing 60 includes an upper segment 80 and a lower segment 82. The upper segment has recesses 84 adjacent opposite sides forming flanges 86 for receiving bolts for joining the segment halves 80 and 82 to one another. While the bolt holes are only shown for the upper segment 80, it will be appreciated that a complete bolt circle with similarly spaced bolt holes is provided. It will also be appreciated that the bolts 74 are insulated, for example, by providing an insulated inner washer 88 and insulating material about the threaded portions of the bolt which extend through the casing 60 and conductive ring 62. As a consequence of this construction, the insulating value of each of the insulating layers can be ascertained by checking measurements between the conductive ring and the seal casing 60 on the one hand and between the conductive ring and the end shield 14 on the other hand. Furthermore, by using only a single bolt circle to effect the double-insulating effect, the seal assembly is enabled for disposition within the reduced volume between the end shield 14 and shaft 16 in the new generators where previously larger spaces were available for effecting the hydrogen seal casing.

While the invention has been described in connection with what is presently considered to be the most practical and preferred embodiment, it is to be understood that the invention is not to be limited to the disclosed embodiment, but on the contrary, is intended to cover various modifications and equivalent arrangements. For example, conductive ring 62 and insulating layers 64,66 can be bonded directly to each other (with the conductive ring 62 being sandwiched between the two insulating layers) and to portion 72 of seal casing 60.

## Claims

1. An electrical generator comprising:
a generator housing having an annular end wall;
a rotor shaft in said generator housing;
a generally annular seal carried by said generator housing and wall for sealing about said shaft;
said seal including an annular casing, an annular conductive ring, a first annular electrically insulating layer between said casing and one side of said conductive ring and a second annular electrically insulating layer between an opposite side of said conductive ring and said end wall; and
means for securing said seal to said end wall of said housing.

2. A generator according to Claim 1 wherein said securing means includes a plurality of bolts extending through said casing, said conductive ring and said insulating layers and into said end wall, said bolts being electrically insulated from said casing and said conductive ring.

3. A generator according to Claim 1 wherein said end wall is annular and lies perpendicular to an axis of rotation of said shaft, said securing means including a plurality of bolts forming a single bolt circle extending through said casing, said conductive ring and said insulating layers and into said annular end wall.

4. A generator according to Claim 1 wherein said casing comprises arcuate casing segments having bolt flanges for securing the arcuate segments to one another about said shaft.

5. A generator according to Claim 1 wherein said conductive ring is electrically isolated from said casing and said housing by said first and second insulating layers thereof, respectively.

6. A generator according to Claim 1 wherein said insulating layers lie at substantially like radial distances from an axis of rotation of said shaft.

7. A generator according to Claim 1 wherein said end wall is annular and lies perpendicular to an axis of rotation of said shaft, said securing means including a plurality of bolts forming a single bolt circle extending through said casing, said conductive ring and said insulating layers and into said annular end wall, said bolts being electrically insulated from said casing and said conductive ring.

8. A generator according to Claim 7 wherein said casing comprises arcuate casing segments having bolt flanges for securing the arcuate segments to one another about said shaft

9. A generator according to Claim 8 wherein said conductive ring is electrically isolated from said casing and said housing by said first and second insulating layers thereof, respectively.

10. A double insulated seal for an electric generator having an annular casing and an end shield, said seal comprising a conductive ring sandwiched between two layers of electrical insulation, and wherein said casing, conductive ring and electrical insulation layers are adapted to be secured one to another between said annular casing and said end shield.
